# EUROPÄISCHE PATENTANMELDUNG

(11) **EP 1 953 015 A1**
(43) Veröffentlichungstag der Anmeldung: **06.08.2008**
(21) Anmeldenummer: 07033598.9
(22) Anmeldetag: 27.12.2007
(51) Int. Cl.: B60H 1/00

(54) **Klimaanlage für ein Kraftfahrzeug**

(30) Priorität: 31.01.2007 DE 102007004875
(71) Anmelder: Enerday GmbH, 82131 Stockdorf (DE)
(72) Erfinder: Pfalzgraf, Manfred, 82211 Herrsching am Ammersee (DE); Bedenbecker, Markus, 82131 Gauting (DE); Boltze, Matthias, 17039 Wulkenzin (OT Neuendorf) (DE); Engl, Andreas, 80689 München (DE)
(74) Vertreter: Schumacher & Willsau

(57) **Zusammenfassung**

Die Erfindung betrifft eine Klimaanlage (12) zur Standklimatisierung eines Kraftfahrzeugs, die ein Brennstoffzellensystem (14) zu deren Betrieb und eine Ausgabeeinrichtung (106) zum Ausgeben von Systemmeldungen umfasst.

Erfindungsgemäß ist vorgesehen, dass die Ausgabeeinrichtung (106) eine fahrzeugexterne Ausgabeeinrichtung (106) ist.

Darüber hinaus betrifft die Erfindung ein Fahrzeug mit einer derartigen Klimaanlage.

## Beschreibung

Die Erfindung betrifft eine Klimaanlage zur Standklimatisierung eines Kraftfahrzeugs, die ein Brennstoffzellensystem zu deren Betrieb und eine Ausgabeeinrichtung zum Ausgeben von Systemmeldungen umfasst.

Darüber hinaus betrifft die Erfindung ein Fahrzeug mit einer derartigen Klimaanlage.

Aus der WO 03/093737 A1 ist eine Klimaanlage mit einer Brennstoffzelle zur Standklimatisierung eines Fahrzeugs bekannt. Ferner ist aus dieser Druckschrift eine Steuerung der Klimaanlage bekannt. Systemmeldungen der Klimaanlage werden einem Fahrer über ein Display im Fahrzeuginnenraum mitgeteilt. Zumindest in manchen Fällen kann es jedoch erforderlich sein, dem Fahrer Systemmeldungen unmittelbar nach deren Auftreten mitzuteilen.

Es ist daher die Aufgabe der vorliegenden Erfindung, die gattungsgemäßen Klimaanlagen derart weiterzubilden, dass eine Ausgabe einer Systemmeldung an den Benutzer auch unmittelbar nach deren Auftreten zuverlässig sichergestellt werden kann.

Diese Aufgabe wird durch die Merkmale des unabhängigen Anspruchs gelöst.

Vorteilhafte Ausgestaltungen und Weiterbildungen der Erfindung ergeben sich aus den abhängigen Ansprüchen.

Die erfindungsgemäße Klimaanlage baut auf dem gattungsgemäßen Stand der Technik dadurch auf, dass die Ausgabeeinrichtung eine fahrzeugexterne Ausgabeeinrichtung ist. Der Fahrer beziehungsweise Benutzer kann die fahrzeugexterne Ausgabeeinrichtung, die beispielsweise einem fahrzeugexternen Gerät zur Steuerung der Standklimatisierung des Kraftfahrzeugs zugeordnet ist, fortwährend mit sich führen und über die Ausgabeeinrichtung Systemmeldungen der Klimaanlage empfangen sowie per Anfrage abrufen. Vorzugsweise werden die Systemmeldungen der Klimaanlage über eine Funkübertragung an das fahrzeugexterne Gerät zur Steuerung der Standklimatisierung übertragen und können somit durch die Ausgabeeinrichtung ausgegeben werden.

Die erfindungsgemäße Klimaanlage kann in vorteilhafter Weise derart weitergebildet werden, dass die fahrzeugexterne Ausgabeeinrichtung einer Fernbedienung der Klimaanlage zugeordnet ist. So verfügt die Fernbedienung als das fahrzeugexterne Gerät beispielsweise zusätzlich über ein Display oder Signallampen (zum Beispiel Leuchtdioden), über das die Systemmeldungen dem Benutzer mitgeteilt werden können.

Alternativ kann die erfindungsgemäße Klimaanlage auch so verwirklicht werden, dass die fahrzeugexterne Ausgabeeinrichtung einem Mobiltelefon zugeordnet ist. In diesem Fall wird das fahrzeugexterne Gerät durch das Mobiltelefon gebildet.

In einer bevorzugten Ausführung der erfindungsgemäßen Klimaanlage ist vorgesehen, dass über die fahrzeugexterne Ausgabeeinrichtung Systemmeldungen über eine Fahrzeuginnentemperatur ausgegeben werden können. Der Benutzer wird auf diese Weise darüber informiert, zu welchem Zeitpunkt eine vorgegebene Solltemperatur des Fahrzeuginnenraums erreicht worden ist.

Darüber hinaus betrifft die Erfindung ein Fahrzeug mit einer derartigen erfindungsgemäßen Klimaanlage.

Es zeigen:
- Figur 1: eine schematische Darstellung einer erfindungsgemäßen Klimaanlage;
- Figur 2: eine schematische Darstellung des Kraftfahrzeugs mit der erfindungsgemäßen Klimaanlage;
- Figur 3: ein Flussdiagramm eines Klimatisierungsbetriebs; und
- Figur 4: ein Flussdiagramm der erfindungsgemäßen fahrzeugexternen Systemmeldungsausgabe.

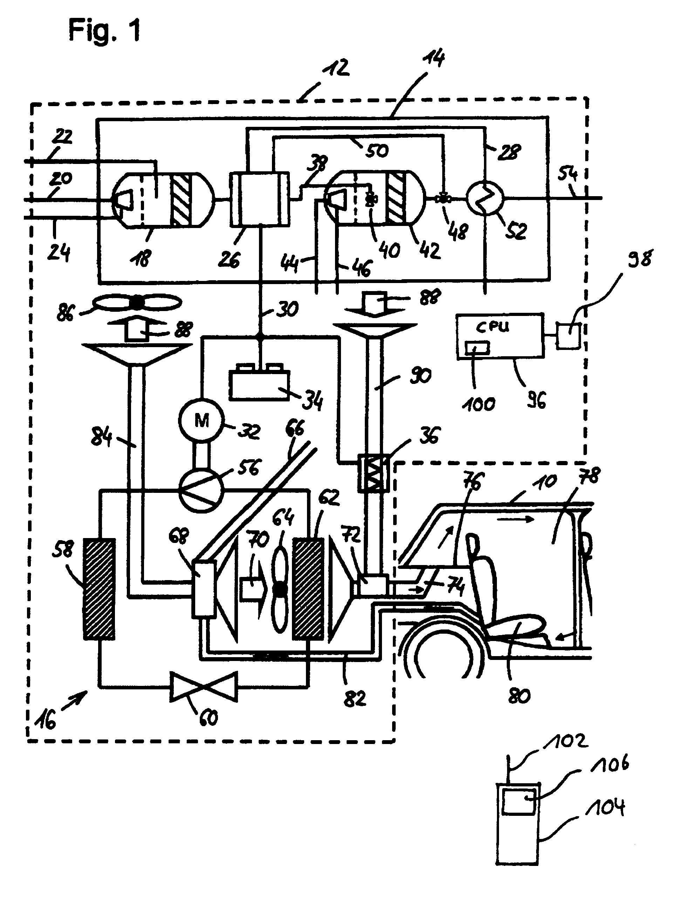

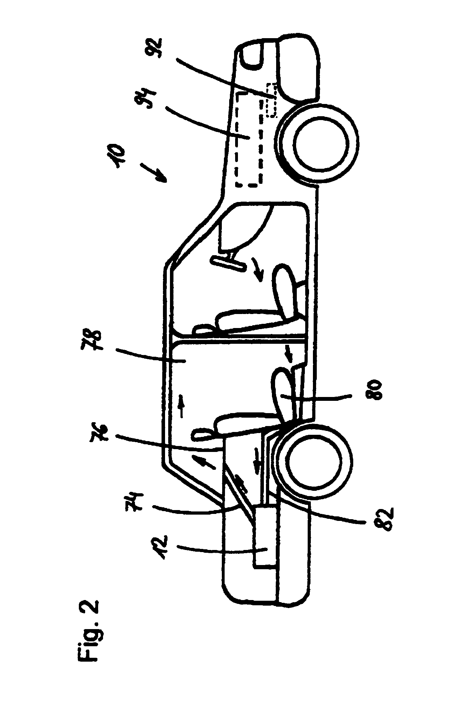

Figur 1 zeigt eine schematische Darstellung einer erfindungsgemäßen Klimaanlage. Die in einem Kraftfahrzeug 10 installierte Klimaanlage 12 (Einbaulage siehe Fig. 2), die in Figur 1 mit einer gestrichelten Linie umrissen ist, umfasst als Hauptelemente ein Brennstoffzellensystem 14 und einen Kältekreis 16.

Das Brennstoffzellensystem 14 umfasst einen Reformer 18, dem über einen Brennstoffstrang 20 aus einem nicht dargestellten Brennstofftank Brennstoff zuführbar ist. Ferner ist dem Reformer 18 an einer zweiten Brennstoffzuführstufe mittels eines Brennstoffstrangs 22 ebenfalls aus dem Brennstofftank Brennstoff zuführbar. Als Brennstoffsorten kommen Diesel, Benzin, Erdgas und weitere aus dem Stand der Technik bekannte Brennstoffsorten in Frage. Weiterhin ist dem Reformer 18 über einen Oxidationsmittelstrang 24 Oxidationsmittel, d.h. insbesondere Luft, zuführbar. Das von dem Reformer 18 erzeugte Reformat ist einem Brennstoffzellenstapel 26 zuführbar. Alternativ kann anstatt des Brennstoffzellenstapels 26 auch nur eine Brennstoffzelle vorgesehen sein. Bei dem Reformat handelt es sich um ein wasserstoffhaltiges Gas, das in dem Brennstoffzellenstapel 26 mit Hilfe von über einen Kathodenzuluftstrang 28 geförderter Kathodenzuluft unter Erzeugung von elektrischer Energie und Wärme umgesetzt wird. Die erzeugte elektrische Energie ist über eine elektrische Leitung 30 einem Elektromotor 32, einer Batterie 34 und einer elektrischen Heizeinrichtung 36 der Klimaanlage 12 zuführbar. Im dargestellten Fall ist das Anodenabgas über einen Anodenabgasstrang 38 einer Mischeinheit 40 eines Nachbrenners 42 zuführbar. Ferner ist dem Nachbrenner 42 über einen Brennstoffstrang 44 Brennstoff aus dem Brennstofftank und über einen Oxidationsmittelstrang 46 Oxidationsmittel zuführbar. In den Brennstoffsträngen 20, 22 und 44 sind geeignete, nicht dargestellte Fördereinrichtungen, wie beispielsweise Pumpen, angeordnet. Ebenso sind in den Oxidationsmittelsträngen 24 und 46 entsprechende, nicht dargestellte Fördereinrichtungen, in diesem Fall vorzugsweise Gebläse, angeordnet. Diese Fördereinrichtungen können direkt vom Brennstoffzellenstapel 26 oder von der Batterie 34 mit Strom versorgt werden. In dem Nachbrenner 42 erfolgt eine Umsetzung des abgereicherten Anodenabgases mit dem geförderten Brennstoff und Oxidationsmittel zu einem Verbrennungsabgas, welches in einer Mischeinheit 48 mit Kathodenabluft vermischt wird, die über einen Kathodenabluftstrang 50 von dem Brennstoffzellenstapel 26 zu der Mischeinheit 48 gefördert wird. Das schadstoffarme Verbrennungsabgas durchströmt einen Wärmetauscher 52 zum Vorwärmen der Kathodenzuluft und verlässt schließlich das Brennstoffzellensystem 14 über einen Abgasauslass 54.

In dem Kältekreis 16 sind ein Kompressor 56, ein Kondensator 58, ein Expansionsorgan 60 und ein Verdampfer 62 angeordnet. Der Kompressor 56 ist von dem Elektromotor 32 antreibbar, welcher wiederum vorzugsweise durch den Brennstoffzellenstapel 26 des Brennstoffzellensystems 14 mit Energie versorgt wird, aber kurzzeitig auch von der Batterie 34 mit Energie versorgt werden kann. Dem Verdampfer 62 ist ein Gebläse 64 zugeordnet. Über eine Außenluftleitung 66 kann von Außen Umgebungsluft angesaugt werden. Der Begriff "von Außen", wie er im Zusammenhang mit dieser Erfindung verwendet wird, bedeutet dabei von außerhalb des Innenraumes 78, bezeichnet somit die das Kraftfahrzeug 10 umgebende Luft. Die Außenluftleitung 66 führt zu einer Stelleinrichtung 68, welche die Außenluft dem Gebläse 64 zuführen kann. Die von der Stelleinrichtung 68 zum Gebläse 64 geleitete Luft strömt als Luftstrom 70 an dem Verdampfer 62 vorüber. Auf diese Weise kann dem Luftstrom 70 durch den Verdampfer 62 Wärmeenergie entzogen werden. Der gekühlte Luftstrom kann dann über eine Stelleinrichtung 72 und eine Luftführung 74 über eine Hutablage 76 einem Fahrzeuginnenraum 78 zugeführt werden. Die Stelleinrichtung 72 kann beispielsweise durch ein Elektromagnetventil oder durch Rückschlagventile, welche jeweils nur eine Strömung von den beiden Zuleitungen hin zur Luftführung 74 zulassen, realisiert werden. Die gekühlte Luft strömt durch den Fahrzeuginnenraum 78 (wie durch Pfeile in Fig. 2 veranschaulicht) und verlässt diesen unterhalb einer Sitzbank 80, vorzugsweise der hinteren Sitzbank. Anschließend strömt die Luft über eine Luftführung 82 zurück zu der Stelleinrichtung 68, wo sie ganz oder teilweise nach Außen abgeführt wird oder zurück zum Gebläse 64 geleitet wird. Für die Führung der Luft nach Außen ist eine entsprechende Leitung vorgesehen, die aus Gründen der Übersichtlichkeit nicht dargestellt ist. Über die Schaltung der Stelleinrichtung 68 lässt sich somit wahlweise ein Frischluft- oder ein Umluftkonzept realisieren, bei dem Luft von Außen über die Außenluftleitung 66 angesaugt wird oder die Luft aus der Luftführung 82 rezirkuliert wird. Auch Mischformen dieser Betriebsarten sind möglich. Ferner kann mittels der Stelleinrichtung 68, die über die Außenluftleitung 66 eingeleitete Luft einer Luftführung 84 und über diese einem Gebläse 86 zugeführt werden. In diesem Falle strömt diese Luft als Luftstrom 88 an heißen Teilen des Brennstoffzellensystems 14 direkt vorüber oder durch (nicht dargestellte) Wärmetauscher, die zwischen dem Luftstrom 88 und den heißen Teilen vermitteln. Die hei-ßen Teile des Brennstoffzellensystems 14 sind vorzugsweise der Reformer 18, der Brennstoffzellenstapel 26 und der Nachbrenner 42. Auf diese Weise kann durch die Abwärme der heißen Teile des Brennstoffzellensystems 14 dem Luftstrom 88 Wärmeenergie zugeführt werden. Der erwärmte Luftstrom 88 führt über eine Luftführung 90 zu der elektrischen Heizeinrichtung 36, die direkt von einer vom Brennstoffzellenstapel 26 erzeugten oder von der Batterie 34 gespeicherten Energie versorgt wird. Somit kann in einem Heizbetrieb die ohnehin schon vorgewärmte Luft in der Luftführung 90 weiter erwärmt werden und über die Stelleinrichtung 72 und die Luftführung 74 dem Innenraum 78 zugeführt werden. Nach dem Durchströmen des Innenraums 78 führt der Luftstrom über die Luftführung 82 zur Stelleinrichtung 68, wo er entweder nach Außen abgeführt wird oder zurück zum Gebläse 86 geleitet wird. Auch hierbei lässt sich über die Schaltung der Stelleinrichtung 68 somit wahlweise in einem solchen Heizbetrieb ein Umluftkonzept realisieren, bei dem Luft von Außen über die Außenluftleitung 66 angesaugt wird oder die Luft aus der Luftführung 82 rezirkuliert wird.

Nachfolgend werden verschiedene Betriebszustände aufgezeigt, die mittels der vorstehend beschriebenen Klimaanlage realisierbar sind:

Kühlbetrieb mit Umluftzirkulation: In diesem Betriebszustand ist die Stelleinrichtung 68 so geschaltet, dass Luft aus dem Innenraum 78 über die Luftführung 82 zu dem Gebläse 64 geführt wird. Dieser Luftstrom 70 wird gekühlt und über die Stelleinrichtung 72 und die Luftführung 74 in den Innenraum 78 geführt, wodurch dieser gekühlt wird. Um im Kühlbetrieb ein Aufheizen des Kofferraums, in dem die Klimaanlage 12 angeordnet ist, zu vermeiden, sind entsprechende (nicht dargestellte) Gebläse und Leitungen vorgesehen, welche die Abwärme der Klimaanlage 12 (insbesondere des Brennstoffzellensystems 14, des Kondensators 58, des Kompressors 56 und des Elektromotors 32) nach Außen abführen. Im Falle des Kondensators 58 könnte dieser alternativ auch Außen am Fahrzeug 10 angeordnet werden, um somit die Abwärme direkt abzutransportieren.

Kühlbetrieb mit Außenluftzuführung: In diesem Betriebszustand ist die Stelleinrichtung 68 so geschaltet, dass Außenluft über die Außenluftleitung 66 zu dem Gebläse 64 geführt wird. Der Luftstrom 70 wird gekühlt und über die Stelleinrichtung 72 und die Luftführung 74 in den Innenraum 78 geführt. Der über die Luftführung 82 aus dem Innenraum 78 führende Luftstrom wird von der Stelleinrichtung 68 nach Außen abgegeben. Hinsichtlich des Abführens der Abwärme der Klimaanlage 12 werden die im Rahmen des vorstehend beschriebenen Kühlbetriebs erläuterten Maßnahmen ergriffen.

Heizbetrieb mit Umluftzirkulation: In diesem Betriebszustand wird über die Luftführung 82, die Stelleinrichtung 68 und die Luftführung 84 ein Luftstrom 88 aus dem Innenraum 78 zum Gebläse 86 geführt. Der Kältekreis 16 ist nicht in Betrieb, d.h. der Elektromotor 32 wird nicht betrieben. Das Gebläse 86 führt den Luftstrom 88 an den heißen Teilen des Brennstoffzellensystems 14 vorüber. Die auf diese Weise vorgewärmte Luft wird mittels der Luftführung 90 zu der elektrischen Heizeinrichtung 36 und weiter zur Stelleinrichtung 72 geführt. Die elektrische Heizeinrichtung 36 wird zur Erwärmung der Luft in der Luftführung 90 mit elektrischem Strom betrieben. Anschließend strömt die erwärmte Luft über die Stelleinrichtung 72 und die Luftführung 74 in den Innenraum 78.

Heizbetrieb mit Außenluftzuführung: In diesem Betriebszustand wird Außenluft über die Außenluftleitung 66 von der Stelleinrichtung 68 der Luftführung 84 zugeführt. Die durch den Betrieb des Brennstoffzellensystems 14 entstehende Abwärme erwärmt den Luftstrom 88. Dieser erwärmte Luftstrom wird, wie im vorstehend beschriebenen Betriebszustand, über die Luftführung 90, die elektrische Heizeinrichtung 36, die Stelleinrichtung 72 und die Luftführung 74 in den Innenraum 78 geleitet. Anschließend wird dieser Luftstrom über die Luftführung 82 zur Stelleinrichtung 68 geführt, wo er nach Außen abgegeben wird.

Diese unterschiedlichen Betriebszustände werden über eine elektronische Steuereinheit 96 angesteuert, die je nach Temperatur im Innenraum 78, Außentemperatur, eingestellten Solltemperaturen und gewünschtem Klimatisierungsbetrieb den geeigneten Betriebszustand auswählt. Diese elektronische Steuereinheit 96 weist einen Systemmeldungsspeicher 100 auf und ist zumindest mit den entsprechenden Fördereinrichtungen in den Strängen 20, 22, 24, 44 und 46 der Energieverteilung in der elektrischen Leitung 30, den Gebläsen 64 und 86, der elektrischen Heizeinrichtung, dem Elektromotor 32, den Stelleinrichtungen 68 und 72, den entsprechenden Temperatursensoren verbunden ist. Ferner ist die elektronische Steuereinheit 96 mit zumindest einem Sensor verbunden, mittels dem feststellbar ist, ob sich ein Benutzer im Kraftfahrzeug 10 befindet. Für die Feststellung, ob sich ein Benutzer im Fahrzeug befindet gibt es mehrere Möglichkeiten. Als erste Möglichkeit kann durch Kopplung der elektronischen Steuereinheit mit dem Zündschloß des Kraftfahrzeugs 10 bestimmt werden, ob die Zündung eingeschaltet ist. Falls die Zündung eingeschaltet ist kann daraus abgeleitet werden, dass sich ein Benutzer im Kraftfahrzeug 10 befindet. Ferner kann über einen Drucksensor in einem Fahrzeugsitz, vorzugsweise dem Fahrersitz, festgestellt werden, ob eine Person in diesem Fahrzeugsitz sitzt. Außerdem kann die elektronische Steuereinheit 96 mittels eines sonstigen Sensors, wie beispielsweise einem Türöffnungssensor, einem Bewegungssensor usw., bestimmen, ob sich ein Benutzer im Kraftfahrzeug 10 befindet. Weiterhin ist die elektronische Steuereinheit 96 über eine elektrische Kopplung mit einer Sende-/Empfangseinrichtung 98 verbunden, über die im Zusammenhang mit der Klimaanlage 92 stehende Informationen an ein fahrzeugexternes Gerät 104 gesendet werden können. Das fahrzeugexterne Gerät 104 ist zu diesem Zweck ebenso mit einer Sende-/Empfangseinrichtung 102 ausgestattet. Die Informationen können zum Beispiel in dem Systemmeldungsspeicher 100 gespeichert sein. Beispielsweise kann das fahrzeugexterne Gerät 104 zur Steuerung der Standklimatisierung des Kraftfahrzeugs 10 vorgesehen sein und wird insbesondere durch eine Fernbedienung 104 oder ein Mobiltelefon 104 ausgebildet. Das fahrzeugexterne Gerät 104 umfasst eine Ausgabeeinrichtung 106, beispielsweise in der Form eines Anzeigedisplays 106, über die die im Zusammenhang mit der Klimaanlage 92 stehenden Informationen ausgegeben werden können. Ferner können über das fahrzeugexterne Gerät 104 auch Anweisungen zur Standklimatisierung über die Sende-/Empfangseinrichtung 102 an die elektronische Steuereinheit gesendet werden. Insbesondere ist es mit dem fahrzeugexternen Gerät 104 möglich, Informationen bezüglich der Standklimatisierung des Kraftfahrzeugs 10 abzurufen. So kann insbesondere vorgesehen sein, über das fahrzeugexterne Gerät 104 eine Anweisung an die elektronische Steuereinheit 36 zu senden, die Kraftfahrzeuginnentemperatur zu erfassen und an das fahrzeugexterne Gerät 104 zu übermitteln. Über das fahrzeugexterne Gerät 104 ist somit durch die Ausgabeeinrichtung 106 die Kraftfahrzeuginnentemperatur ausgebbar. Zusätzlich oder alternativ dazu ist es auch möglich, dass die elektronische Steuereinheit 96 ohne Empfang von Anweisungen des fahrzeugexternen Geräts 104 spezifische und vorgegebene Informationen bezüglich der Standklimatisierung an das fahrzeugexterne Gerät 104 übermittelt. Beispielsweise dann, wenn die eingestellte Solltemperatur im Fahrzeuginnenraum 78 des Kraftfahrzeugs 10 erreicht ist oder kurz vor Erreichen dieser Solltemperatur.

Figur 2 zeigt eine schematische Darstellung des Kraftfahrzeugs 10 mit der erfindungsgemäßen Klimaanlage 12. In Figur 2 ist insbesondere die Einbaulage der Klimaanlage 12 veranschaulicht. Die erfindungsgemäße Klimaanlage 12 ist im Kofferraum montierbar, vorzugsweise als nachrüstbare Einheit. Zusätzlich zur beschriebenen Klimaanlage 12 hat das Kraftfahrzeug 10 eine konventionelle Klimaanlage 92, bei der ein Kompressor eines herkömmlichen Kältekreises mechanisch von einem Antriebsaggregat 94, vorzugsweise einem Verbrennungsmotor, antreibbar ist. Während der Fahrt des Kraftfahrzeugs 10 und dem damit verbundenen Betrieb des Antriebsaggregats 94 kann der Innenraum 78 über die konventionelle, fahrzeugeigene Klimaanlage 92 in allgemein bekannter Weise gekühlt bzw. mittels Abwärme des Antriebsaggregats 94 erwärmt werden. Bei Stillstand des Antriebsaggregats 94 kann der Innenraum 78 über die erfindungsgemäße Klimaanlage 12 klimatisiert werden.

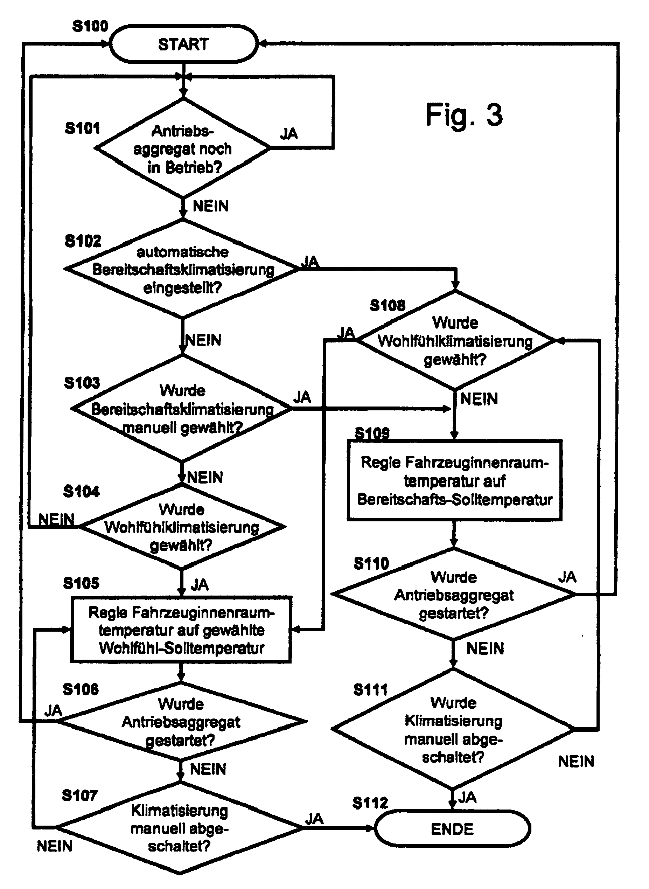

Figur 3 zeigt ein Flussdiagramm des Klimatisierungsbetriebs der erfindungsgemäßen Klimaanlage 12. Die Routine aus Figur 3, welche von der elektronischen Steuereinheit 96 ausgeführt wird, startet bei Schritt S100, wenn die Klimaanlage 12 manuell eingeschaltet wird. Bei Schritt S101 wird bestimmt, ob das Antriebsaggregat 94 immer noch in Betrieb ist. Der Prozess fährt erst dann zu Schritt S102 fort, wenn die Abfrage in Schritt S101 negativ ist. In Schritt S102 wird bestimmt, ob der Benutzter über einen Auswahlschalter oder eine entsprechende Programmierung der Klimaanlage 12 einen automatischen Bereitschaftsklimatisierungsbetrieb ausgewählt hat. Falls dies nicht der Fall ist, fährt der Prozess zu Schritt S103 fort, wo bestimmt wird, ob der Benutzer manuell eine Bereitschaftsklimatisierung ausgewählt hat. Ist dies nicht der Fall, dann fährt der Prozess zu Schritt S104 fort, wo bestimmt wird, ob der Benutzer manuell eine Wohlfühlklimatisierung ausgewählt hat. Falls dies mit "JA" zu beantworten ist, fährt der Prozess zu Schritt S105 fort, bei dem eine Wohlfühlklimatisierung durchgeführt wird. Bei dieser Wohlfühlklimatisierung wird der Innenraum 78 des Kraftfahrzeugs 10 auf eine Wohlfühltemperatur (z.B. 18°C) klimatisiert, indem eine Auswahl aus den verschiedenen Heiz- und Kühlmodi von der elektronischen Steuereinheit 96 getroffen wird. Mit dem nachfolgenden Schritt S106 wird festgelegt, dass diese Wohlfühlklimatisierung automatisch gestoppt wird, wenn das Antriebsaggregat 94 gestartet wird. Wenn in Schritt S106 demnach bestimmt wird, dass das Antriebsaggregat 94 noch nicht läuft, wird in S107 bestimmt, ob die Klimaanlage 12 manuell abgestellt wurde. Bei einer manuellen Abschaltung endet der Prozess bei Schritt S112, ansonsten kehrt der Prozess zurück zu Schritt S105. Falls der Benutzer in Schritt S104 keine Wohlfühlklimatisierung gewählt hat, kehrt der Prozess von dort zu Schritt S101 zurück. Falls in Schritt S102 bestimmt wurde, dass eine automatische Bereitschaftsklimatisierung gewählt wurde, dann fährt der Prozess von dort zu Schritt S108 fort, wo bestimmt wird, ob von dem Benutzer manuell eine Wohlfühlklimatisierung gewählt wurde. Ist dies der Fall, dann fährt der Prozess zu Schritt S105 fort, wo die bereits beschriebene Wohlfühlklimatisierung durchgeführt wird. Falls in Schritt S108 bestimmt wird, dass der Benutzer keine Wohlfühlklimatisierung ausgewählt hat, dann fährt der Prozess zu Schritt S109 fort, wo die erfindungsgemäße Bereitschaftsklimatisierung durchgeführt wird. Bei dieser Bereitschaftsklimatisierung wird die Temperatur im Innenraum 78 auf eine Bereitschafts-Solltemperatur (z.B. 25°C) geregelt, die sich von der Wohlfühltemperatur unterscheidet. Dies wird realisiert, indem die elektronische Steuereinheit 96 in geeigneter Weise aus den beschriebenen Heiz- und Kühlbetriebsarten auswählt. Ist die Außentemperatur hoch, dann ist die Bereitschafts-Solltemperatur größer als die Wohlfühltemperatur. Ist hingegen die Außentemperatur niedrig, dann ist die Bereitschafts-Solltemperatur geringer als die Wohlfühltemperatur. Somit wird beispielsweise bei hoher Außentemperatur ein Aufheizen des Innenraumes 78 verhindert und im Bedarfsfall ein sehr schnelles Erreichen der Wohlfühltemperatur gewährleistet, weil der Innenraum 78 bereits "vorgekühlt" ist. Nach Schritt S109 fährt der Prozess zu Schritt S110 fort, wo überprüft wird, ob das Antriebsaggregat 94 gestartet wurde. Ist dies der Fall, dann kehrt der Prozess zu Schritt S100 zurück. Ansonsten fährt der Prozess zu Schritt S111 fort, wo bestimmt wird, ob der Benutzer die Klimatisierung manuell abgestellt hat - wenn "JA", dann endet der Prozess bei Schritt S112 und wenn "NEIN", dann kehrt der Prozess zu Schritt S108 zurück.

Der bevorzugte Betrieb der Klimaanlage 12 sieht in der Praxis so aus, dass eine automatische Bereitschaftsklimatisierung gewählt ist. Wird das Antriebsaggregat 94 betrieben, dann kann der Innenraum 78 über die auf das Fahrzeug optimierte, sehr effektive und speziell ausgelegte Klimaanlage 92 klimatisiert werden. Sobald das Antriebsaggregat 94 abgestellt wird (und die Insassen das Kraftfahrzeug 10 eventuell verlassen), startet die Klimaanlage 12 die Bereitschaftsklimatisierung, die den Innenraum bei hoher Außentemperatur auf beispielsweise 25°C kühlt. Dieser Bereitschaftsklimatisierungsbetrieb kann mit 60 Litern Brennstoff problemlos 12 Tage im Dauerbetrieb erfolgen. Der Bereitschaftsklimatisierungsbetrieb wird solange durchgeführt, bis der Benutzer kurz vor Fahrtantritt eine Wohlfühlklimatisierung wählt, die dann den Innenraum 78 auf beispielsweise 18°C kühlt. Die Wohlfühlklimatisierung wird dann solange durchgeführt bis das Antriebsaggregat 94 wieder gestartet wird oder bis die Schadstoffkonzentration in der Umgebungsluft größer als der vorbestimmte Schadstoff-Schwellenwert ist.

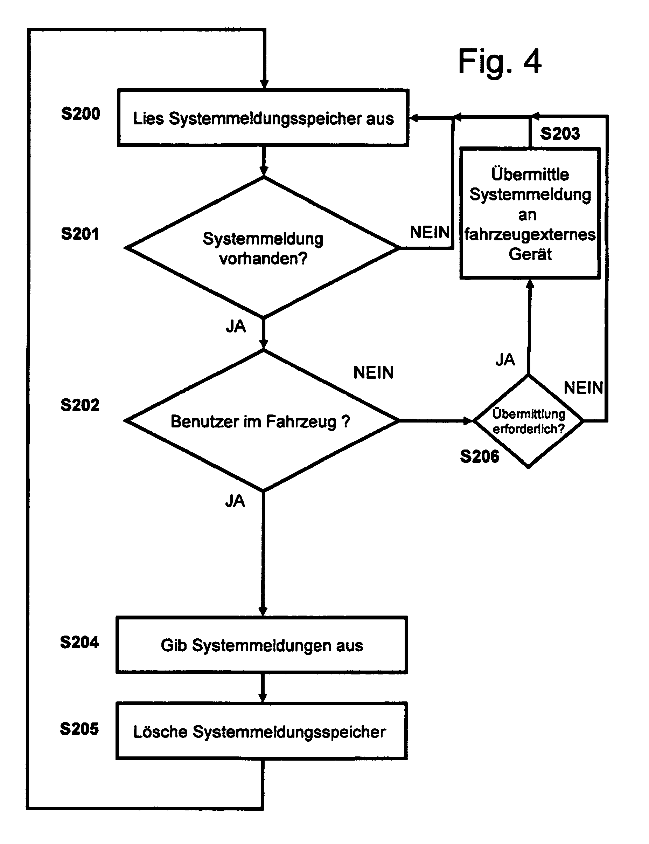

Figur 4 zeigt ein Flussdiagramm der erfindungsgemäßen fahrzeugexternen Systemmeldungsausgabe. Die Routine aus Figur 4 läuft vorzugsweise permanent während des Betriebs der Standklimaanlage 12 ab. Während des Betriebes der Standklimaanlage 12 werden permanent Systemmeldungen aller Art, wie beispielsweise eine Aufforderung zum Nachfüllen von Brennstoff, die aktuelle Temperatur, usw. im Systemmeldungsspeicher 100 abgelegt. In Schritt S200 wird dann in der Routine aus Figur 4 der Systemmeldungsspeicher 100 ausgelesen. Anschließend fährt die Routine zu Schritt S201 fort. Falls in dem Systemmeldungsspeicher 100 auszugebende Systemmeldungen gespeichert sind, wie in Schritt S201 überprüft wird, fährt die Routine zu Schritt S202 fort. Für den Fall, dass keine Systemmeldungen im Systemmeldungsspeicher 100 abgespeichert sind, kehrt die Routine in einer Warteschleife zurück zu Schritt S200. Bei Schritt S202 wird bestimmt, ob sich der Benutzer im Fahrzeug befindet. Dafür gibt es die bereits beschriebenen Möglichkeiten. Falls in Schritt S202 bestimmt wird, dass sich kein Benutzer im Fahrzeug befindet, schreitet die Routine zu Schritt 206 voran. In Schritt S206 wird überprüft, ob in Abhängigkeit von der Art der Systemmeldung eine Übermittlung der Systemmeldung an das fahrzeugexterne Gerät 104 erforderlich ist. Die Feststellung in Schritt S206, welche Art von Systemmeldungen an das fahrzeugexterne Gerät 104 übermittelt werden sollen, kann von dem Benutzer selbst vorgegeben werden; beispielsweise bei einer Konfiguration der Klimaanlage 12 oder in sonstiger Weise. Wenn in Schritt S206 festgestellt wird, dass eine Übermittlung an das fahrzeugexterne Gerät 104 nicht erforderlich ist, kehrt die Routine zu Schritt S200 zurück. Diese Warteschleife hat den Effekt, dass bei einer Standklimatisierung und personenfreiem Fahrzeug die Systemmeldung nur dann ausgegeben wird, wenn eine sofortige Benachrichtigung des Benutzers erforderlich ist oder durch den Benutzer vorgegeben wurde oder eine Person in das Fahrzeug einsteigt und dies durch die oben genannten Methoden festgestellt wird. Wird in Schritt S206 hingegen festgestellt, dass eine Übermittlung der Systemmeldung an das fahrzeugexterne Gerät 104 erforderlich ist, so wird diese Systemmeldung in der vorstehend beschriebenen Art an das fahrzeugexterne Gerät 104 übermittelt. Dem Benutzer wird die Systemmeldung somit über die Ausgabeeinrichtung 106 ausgegeben. Insbesondere kann dem Benutzer eine Fahrzeuginnentemperatur mitgeteilt werden, beispielsweise wenn die Fahrzeuginnentemperatur die eingestellte Solltemperatur erreicht hat. Wenn in Schritt S202 ermittelt wird, dass der Benutzer sich im Kraftfahrzeug 10 befindet, so wird die Systemmeldung auf die übliche Art und Weise ausgegeben, beispielsweise über ein im Fahrzeuginnenraum 78 befindliches Display (Schritt S204). Anschließend wird der Signalmeldungsspeicher 100 in Schritt S204 gelöscht, bevor die Routine schließlich zu Schritt S200 zurückkehrt.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste:

- 10: Kraftfahrzeug
- 12: Klimaanlage
- 14: Brennstoffzellensystem
- 16: Kältekreis
- 18: Reformer
- 20: Brennstoffstrang
- 22: Brennstoffstrang
- 24: Oxidationsmittelstrang
- 26: Brennstoffzellenstapel
- 28: Kathodenzuluftstrang
- 30: Elektrische Leitung
- 32: Elektromotor
- 34: Batterie
- 36: Elektrische Heizeinrichtung
- 38: Anodenabgasstrang
- 40: Mischeinheit
- 42: Nachbrenner
- 44: Brennstoffstrang
- 46: Oxidationsmittelstrang
- 48: Mischeinheit
- 50: Kathodenabluftstrang
- 52: Wärmetauscher
- 54: Abgasauslass
- 56: Kompressor
- 58: Kondensator
- 60: Expansionsorgan
- 62: Verdampfer
- 64: Gebläse
- 66: Außenluftleitung
- 68: Stelleinrichtung
- 70: Luftstrom
- 72: Stelleinrichtung
- 74: Luftführung
- 76: Hutablage
- 78: Fahrzeuginnenraum
- 80: Sitzbank
- 82: Luftführung
- 84: Luftführung
- 86: Gebläse
- 88: Luftstrom
- 90: Luftführung
- 92: Konventionelle Klimaanlage
- 94: Antriebsaggregat
- 96: Elektronische Steuereinheit
- 98: Sende-/Empfangseinrichtung
- 100: Systemmeldungsspeicher
- 102: Sende-/Empfangseinrichtung
- 104: fahrzeugexternes Gerät
- 106: Anzeigedisplay

## Patentansprüche

1. Klimaanlage (12) zur Standklimatisierung eines Kraftfahrzeugs (10), die ein Brennstoffzellensystem (14) zu deren Betrieb und eine Ausgabeeinrichtung (106) zum Ausgeben von Systemmeldungen umfasst, **dadurch gekennzeichnet, dass** die Ausgabeeinrichtung (106) eine fahrzeugexterne Ausgabeeinrichtung (106) ist.

2. Klimaanlage (12) nach Anspruch 1, **dadurch gekennzeichnet, dass** die fahrzeugexterne Ausgabeeinrichtung (106) einer Fernbedienung (104) der Klimaanlage (12) zugeordnet ist.

3. Klimaanlage (12) nach Anspruch 1, **dadurch gekennzeichnet, dass** die fahrzeugexterne Ausgabeeinrichtung (106) einem Mobiltelefon (104) zugeordnet ist.

4. Klimaanlage (12) nach einem der Ansprüche 1 bis 3, **dadurch gekennzeichnet, dass** über die fahrzeugexterne Ausgabeeinrichtung (106) Systemmeldungen über eine Fahrzeuginnentemperatur ausgegeben werden kann.

5. Fahrzeug mit einer Klimaanlage (12) nach einem der Ansprüche 1 bis 4.
